(19) **Europäisches Patentamt European Patent Office Office européen des brevets**

(11) **EP 2 940 580 B1**

(12) **EUROPEAN PATENT SPECIFICATION**

(45) Date of publication and mention
of the grant of the patent:
**28.03.2018 Bulletin 2018/13**

(51) Int Cl.:
***G06F 9/54*** *(2006.01)*

(21) Application number: **14305650.5**

(22) Date of filing: **30.04.2014**

(54) **Method for performing load balancing, distributed computing environment, cluster and computer program product**

Verfahren zur Ausführung von Lastausgleich, verteilter Rechnerumgebung, Cluster- und Computerprogrammprodukt

Procédé pour réaliser un équilibrage de charge, environnement informatique réparti, grappe et produit de programme informatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2015 Bulletin 2015/45**

(73) Proprietor: **ALCATEL LUCENT**
**92100 Boulogne-Billancourt (FR)**

(72) Inventors:
• **Cucinotta, Tommaso**
**Dublin, 15 (IE)**
• **Karnstedt, Marcel**
**Dublin, 15 (IE)**

(74) Representative: **Berthier, Karine et al**
**Alcatel-Lucent International**
**Patent Business**
**Site Nokia Paris Saclay**
**Route de Villejust**
**91620 Nozay (FR)**

(56) References cited:
**US-A1- 2009 031 032     US-A1- 2009 172 139**

• **ION STOICA: "Chord: A Scalable Peer-to-peer Lookup Service for Internet Applications", PROCEEDINGS OF ACM SIGCOMM; 20010827 - 20010831, 31 August 2001 (2001-08-31), page complete, XP002332182,**

## Description

### TECHNICAL FIELD

The present invention relates, in general to load balancing in a distributed computing environment.

### BACKGROUND

Virtualization allows physical computing resources to be shared across multiple systems. For example, multiple operating systems and applications can be executed over the same hardware, thereby increasing utilization and flexibility of hardware. Accordingly, such virtualization allows virtual machines (VMs) to be decoupled from the underlying hardware, thus resulting in multiple virtual machines that can share the same physical hardware.

Modern software components for cloud systems, including virtualized network functions (VNFs) such as IP Multimedia Subsystem (IMS) components or others, and services for multimedia processing and authoring, or gaming and so on, are designed to support elasticity, that is, the capability to grow and de-grow their computational capacity by adding new VMs to, or removing VMs from, the currently running component so as to adapt to the dynamically changing workload conditions. Normally, a load-balancer takes care of balancing the workload across the instances of the component, ensuring that they all take a fair share of the workload imposed on the distributed component.

"Chord" - a scalable peer-to-peer lookup service for internet applications - is described in a paper of the same title by I. Stoica et al in the Proceedings of the 2001 Conference on Applications, Architectures and Protocols for Computer Communications, pp149-160 (ISBN 1-58113-411-8). "Chord" is a distributed lookup protocol which maps keys to nodes in a network and allows efficient location of a node storing a given data item by using a variation of consistent hashing. When a node joins or leaves a network of N nodes, only ~1/N keys are reassigned or mapped to another node.

Published US patent application no US 2009/0172139 discloses a method for balanced and consistent placement of resource management responsibilities within a multi-computer environment such as a cluster, which method is scalable and makes efficient use of cluster resources. The method reduces the time that a cluster is unavailable due to redistribution of management responsibilities by reducing the amount of redistribution of those responsibilities among surviving cluster members.

Published US patent application no. US 2009/0031032 discloses a method for improving the efficiency with which registration requests are handled by a SIP registrar, proxy or application server which is implemented as cluster rather than as a single node. A registration request is received in an edge proxy, and a hash function is applied to a source address of the endpoint that sent the registration request. If the edge proxy is the appropriate node for servicing the request, the registration is performed, otherwise the request is passed to another node corresponding to the result of the hash function.

### SUMMARY

According to a first aspect of the invention, there is provided a method for performing load balancing in a distributed computing environment as provided in claim 1. In an example, the identifiers can include the source and/or destination IP address, or the ID of the subscriber/caller and the destination in a component and so on. A load balancer can distribute workload between respective virtual machine instances can be provided.

According to a second aspect of the invention, there is provided a distributed computing environment as provided in claim 3.

According to a third aspect of the invention, there is provided a computer program product, comprising a computer usable medium having computer readable program code embodied therein, said computer readable program code being adapted to be executed to implement a method for performing load balancing in a distributed computing environment as provided herein.

### BRIEF DESCRIPTION OF THE DRAWINGS

Embodiments will now be described, by way of example only, with reference to the accompanying drawings, in which:

Figure 1a is a schematic representation of a pair of VMs (nodes) before and after the addition of a new node in response to a request for a capacity change according to a typical system;

Figure 1b is a schematic representation of a pair of VMs (nodes) before and after the addition of a new node in response to a request for a capacity change according to an example;

Figure 2a is a schematic representation of the addition of two nodes into an existing four node according to a typical system;

Figure 2b is a schematic representation of the addition of two nodes into an existing four node according to an example;

Figure 3a is a schematic representation of the addition of two nodes into an existing five node according to a typical system;

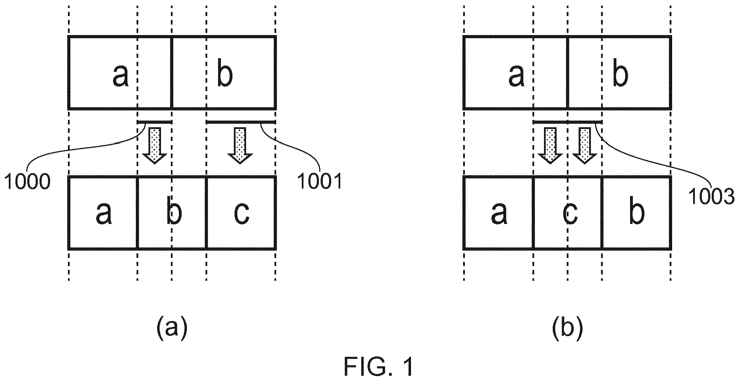

Figure 1a is a schematic representation of a pair of VMs (nodes) before and after the addition of a new node in response to a request for a capacity change according to a typical system;

Figure 1b is a schematic representation of a pair of VMs (nodes) before and after the addition of a new node in response to a request for a capacity change according to an example;

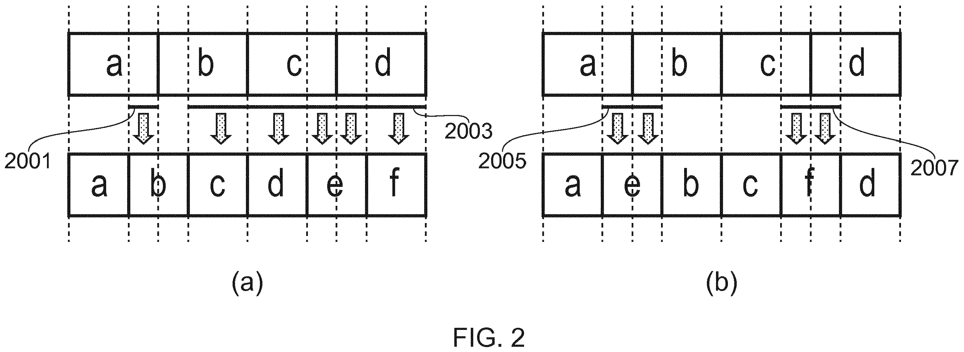

Figure 2a is a schematic representation of the addition of two nodes into an existing four node according to a typical system;

Figure 2b is a schematic representation of the addition of two nodes into an existing four node according to an example;

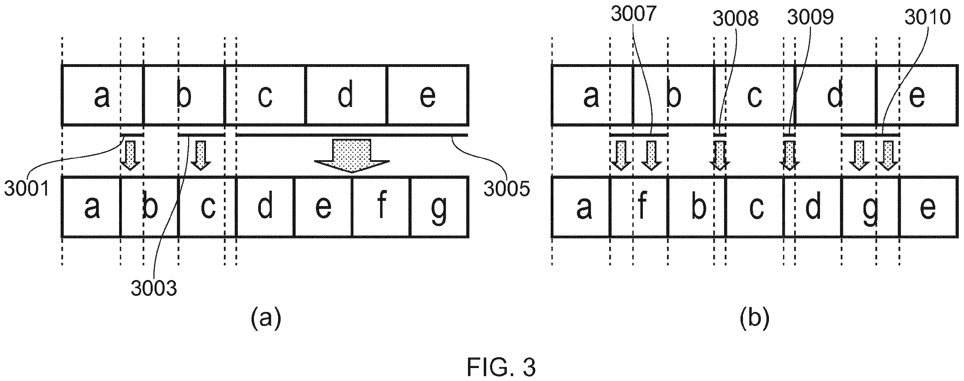

Figure 3a is a schematic representation of the addition of two nodes into an existing five node according to a typical system;

Figure 3b is a schematic representation of the addition of two nodes into an existing five node according to an example;

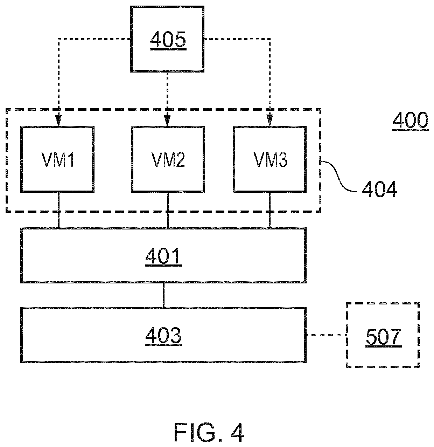

Figure 4 is a schematic representation of a pre-capacity-change virtualised system in the form of a distributed computing environment according to an example; and

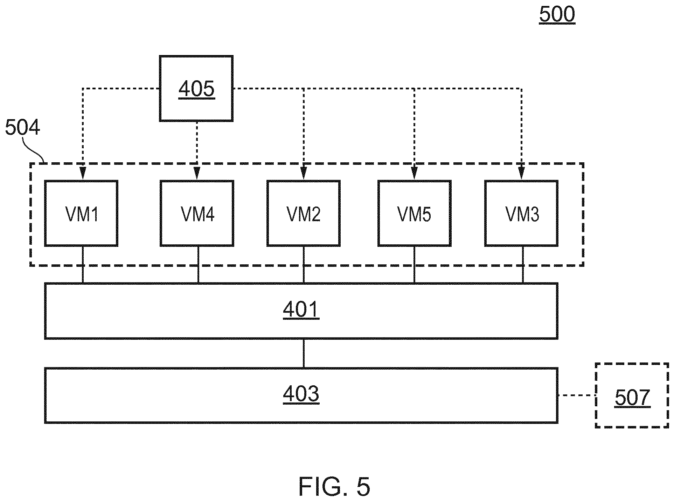

Figure 5 is a schematic representation of a post-capacity-change virtualised system in the form of a distributed computing environment according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

A common way to load-balance workload between multiple VMs executing as a component of a virtualised function for example is by computing a hash value based on a number of elements that typically characterize a request submitted by users for the component such as the source IP address, or the ID of the subscriber/caller and the destination in an IMS component. The space of possible hash values can then be partitioned across the current VM instances of the component, and each request can be routed to the instance whose assigned hash values range(s) contain the hash value just computed on the incoming request. The fields of the user's request that get hashed can be designed so as to include something that is unique to a session of the user, so that the full session is routed to the same VM among the available ones in the case that the specific VM that handles the request stores a state associated with the request internally that needs to be considered for subsequent requests coming from the same user, or for the same user interaction.

For example, the Cassandra elastic NoSQL database system uses a partitioning scheme that leverages the use of hash values in this way, when retrieving values corresponding to a given key value, where the key is hashed into a hash value in the range from 0 to $U=2^{127}-1$ (127-bits natural integer). Multiple instances in a Cassandra cluster are arranged in a ring, where each instance is assigned a so called initial_token, such that each instance handles the requests whose hash falls within the range of hash values going from the initial_token to the initial_token of the next instance in the ring, or to the upper bound of the hash values range. The default process for assigning the initial tokens in such a cluster of N instances is to use a random partitioner that divides the full key range into N balanced partitions. Accordingly, the initial tokens would be: $0, U/N, 2*U/N, 3*U/N, ..., (N-1)*U/N$. This achieves a fairly balanced workload across instances under the assumption that the hash function manages to randomize the incoming requests so as to map them uniformly within the hash values range.

When there is a capacity change in a cluster for a component, for example, the number of VMs in the cluster is incremented or decremented the initial tokens are rearranged so as to keep the workload balanced across the VMs of the post-capacity-change cluster. After re-assignment of the initial token of one or more VMs, these have to transfer their local data to the right instance(s) handling the corresponding hash values ranges, otherwise future requests involving those data items will not be able to find the associated data or state in the component. For example, in an IMS core system, this might lead to unnecessary call drops after growth or degrowth of the cluster. However, if significant changes occur to the hash value ranges of one or more VMs then the data to be transferred among VMs after growth (or degrowth) will also be significantly high, which can lead to additional computational and networking workload.

Without loss of generality, in the case of the addition of a single node (VM) to a cluster, re-assignment of tokens or identifiers can be performed by splitting the range of values assigned to one single existing node (typically the one with the highest load, but which can also be a randomly selected one for example) and assigning half of the values to the new node that has been instantiated for the component. This is a cheap and simple method, but it results in unbalanced load between the nodes in the system. Alternatively for example, an ID can be randomly assigned for the new node in the overall address space (or the node ID can be used as input for a hashing function for example) and the node can fetch data from its new neighbours. This is typically preferred in decentralised peer-to-peer (P2P) systems and is often accompanied by gossip-like mechanisms that eventually result in a balanced situation, exploiting random rendezvous between nodes.

While the completely decentralised aspect is of particular importance in such systems, the time needed to achieve a balanced situation is not acceptable for systems like IMS for example.

In a further alternative, virtual nodes spread over the address space can be exploited, where each physical node is responsible for a range of usually non-consecutive virtual nodes. When a new node joins, it can take over a range of virtual nodes from existing nodes. This solution provides hassle-free (almost) balanced growth. The approach works only as long as the number of virtual nodes exceeds the number of physical nodes.

Cassandra implements a mechanism similar to the first one discussed above, in which the tokens range [a, b] of the node with the maximum current workload is split into two, inserting the new instance right afterwards. So, the existing instance retains the range $[a, (a+b)/2]$, whilst the new instance is assigned the range $[(a+b)/2, b]$. However, this leaves the cluster imbalanced right after the growth (post-capacity-change), as there are now two instances dealing with only half of the hash values ranges dealt with by other instances instead. The cluster is typically supposed to converge towards a rebalanced state only with further future growths, if and when needed. As an alternative, the cluster can be expanded by simply doubling its size, then rebalancing the initial_token values with the same formula as above, resulting in splitting the hash values range of each node before the addition into two. Cassandra provides a tool (nodetool move) to reassign the initial tokens of nodes in a custom way, if desired by whoever triggers the elasticity growth/degrowth. However, rebalancing a cluster using the simple provided formula and associated tool potentially leads to excessive movement/reassignment of hash values of the VMs in the cluster causing unnecessary data transfers across them.

Figure 1 is a schematic representation of the addition of two nodes into an existing two node cluster (N=2, K=2). In figure 1, and similarly with figures 2 and 3, the left hand figure (1a and so on) represents a typical solution to capacity change in a cluster of VM instances, whereas the right hand side figure (1b and so on) represents a solution according to an example. That is, figures 1a, 2a and 3a are typical prior art solutions that are provided for comparison with figures 1b, 2b and 3b which are solutions according to an example.

In the figures, downward pointing arrows and the horizontal lines/segments are depicted that highlight portions of the VMs' data that needs to be moved from the top-row to the bottom-row situation. That is, from a pre-capacity-change set of VM instances to a post-capacity-change set of VM instances.

With reference to figure 1a, which is a schematic representation of a pair of VMs (nodes) before and after the addition of a new node in response to a request for a capacity change according to a typical system, the addition of a new node (c) at the end of the cluster, causes the following re-assignments of hash values, U:

- from - per-capacity-change: 0, U/N, 2*U/N, ..., (N-1)*U/N (top part of figure 1a)
- to - post-capacity-change: 0, U/(N+1), 2*U/(N+1), ..., (N-1)*U/(N+1) (bottom part of figure 1a), with the new node inserted at the end getting the last range: N*U/(N+1).

Data to be moved in figure 1a is shown diagrammatically by 1000 and 1001.

According to an example, it is possible to increase the amount of overlap between the pre-growth and the post-growth hash values ranges for all VMs, thereby minimizing consequent data transfers. Accordingly, a mechanism is provided to change the size of a hash-based load-balanced cluster realizing an elastic distributed component of virtualised function, such as an IMS component for example, hashing the from and/or to fields of SIP messages, or a Cassandra cluster, rebalancing it after growth or degrowth, so as to minimize the data transfers needed to restore a uniformly rebalanced system.

For example, when adding a new node into a cluster of N nodes the pre-capacity-change situation is a balanced one, with initial tokens being: 0, U/N, 2*U/N, ..., (N-1)*U/N. A single new VM instance to be added will be positioned in the cluster at a position given by round(N/2), and then all nodes can be re-assigned the rebalanced hash values ranges: 0, U/(N+1), 2*U/(N+1), ..., N*U/(N+1).

However, as the new node has been inserted in the middle of the cluster sequence ("ring", in Cassandra terminology), then the half nodes preceding it will shift their hash value ranges towards lower values, whilst the half nodes after it will shift slightly their ranges towards higher values. This results in much less data movement compared to adding the new node at the beginning or end of the ring as in figure 1a for example.

When adding a number K of new nodes at once, the K new nodes are distributed/positioned within the cluster so as to maximize overlapping regions of the hash key values before and after the addition in each existing node (thus minimizing the needed data transfers). The new cluster (that is, the post-capacity-change cluster) after insertion has N+K nodes overall. Conceptually, the existing N nodes are split into K equally sized partitions and one new node is positioned in the middle of each of these partitions. According to an example, in the new N+K sized cluster after the addition, the K new nodes are found at positions (1-based):

$$\text{round}(N/(2K)+1+(i-1)(N/K+1)), \ i = 1, ..., K$$

All N+K nodes are re-assigned ranges as: 0, U/(N+K), 2*U/(N+K), ..., (N+K-1)*U/(N+K). That is, for example, a range of identifiers with limits/boundaries defined by 0 to U/(N+K) can be mapped to a node, a range of identifiers with limits/boundaries defined by U/(N+K) to 2*U/(N+K) can be mapped to the next node in the cluster, and so on.

With reference to figure 1b, which is a schematic representation of a pair of VMs (nodes) before (top) and after (bottom) the addition of a new node, c, in response to a capacity change or request for a capacity change according to an example, with N=2 nodes (a and b), a new node c is thus inserted in the second position (between nodes a and b) resulting in the situation depicted in the bottom part of figure 1b. The ranges of the hash values of the components a and b that have to be moved into different nodes is reduced. Ranges to be moved (corresponding to required data transfers) are highlighted as small horizontal lines spanning horizontally across the hash value range that needs to be moved, accompanied by a small vertical arrow indicating that the corresponding data values have to be moved from their current VM (as identified on the upper side of figures 1a and 1b, representing the pre-growth situation) to a different VM (as identified in the lower part of the figures, representing the post-growth situation). As can be seen, node a transfers 1/3 of its contents to node b, whilst node b transfers 2/3 of its contents to node c resulting in a decreased transfer requirement compared to the situation shown in figure 1a, in order to restore a consistent situation. Data to be moved in figure 1b is shown diagrammatically by 1003, which represents a smaller data transfer compared to the situation in figure 1a.

The range of identifiers (hash values) is thus remapped, in order to form reassigned subsets of the range of identifiers, to respective ones of a second set of VM instances logically positioned within the cluster according to a predefined rule whereby to minimise data transfer between respective ones of the multiple virtual machine instances after a capacity change or request for a capacity change of the cluster. In the example of figure 1b, the second set of VM instances comprises nodes a, b and c.

Figure 2 is a schematic representation of the addition of two nodes into an existing four node cluster (N=4, K=2). More specifically, figure 2a is a schematic representation of a typical pre- and post-capacity change situation that demonstrates the data transfers needed if the two new nodes are added at the end of the cluster. Node a needs to transfer 1/3 of its contents, node b 2/3 of its contents, nodes c and d need to transfer their overall content spreading it between d, e and f.

Figure 2b is a schematic representation of a pre- and post-capacity change situation according to an example, in which two new nodes are added to an existing set of four nodes. In the new cluster with 4+2=6 elements, the two new nodes e and f are positioned in the 2nd and 5th positions within the cluster, as shown in the bottom part of figure 2b. Therefore, all four nodes a, b, c, d need only transfer only 1/3 of their respective contents, as can be seen in figure 2a. The saving in network bandwidth and the time needed to restore a consistent operational, yet perfectly balanced, state of the component is therefore significant. Data to be moved in figure 2a is shown diagrammatically by lines 2001 and 2003, which represents a larger data transfer compared to the situation in figure 2b, with data transfer between pre- and post-capacity-change situations shown by lines 2005, 2007.

Figure 3 is a schematic representation of the addition of two nodes into an existing cluster of five nodes (N=5, K=2). More specifically, figure 3a is a schematic representation of a typical pre- and post-capacity change situation that demonstrates the data transfers needed if the two new nodes are added at the end of the cluster. Figure 3b is a schematic representation of a pre- and post-capacity change situation according to an example, in which two new nodes are added to an existing set of five nodes. Comparison of the data to be transferred (as depicted by the horizontal lines between top and bottom portions of the figures) demonstrates that the solution depicted in figure 3b results in a significant reduction in the amount of data to be transferred as a result of the intelligent positioning of the two new nodes at positions 2 and 6 of the post-capacity-change cluster. Data to be moved in figure 3a is shown diagrammatically by lines 3001, 3003 and 3005, which represents a larger data transfer compared to the situation in figure 3b, with data transfer between pre- and post-capacity-change situations shown by lines 3007, 3008, 3009 and 3010.

According to example, the case of degrowth, in which one or more VM instances for a component is/are removed or terminated, is handled in an analogous manner. Assuming removal of K nodes, the existing N nodes are conceptually split into K equally sized ranges and one node from the middle position of each one of these ranges is removed. In the examples provided above, the figures can be interpreted in a dual way, if we assume that the bottom represents the initial situation with (N+K) nodes, from which we remove K nodes, obtaining the upper-side figures. Similarly to that described above, this approach results in the smallest amount of data to be transferred across remaining nodes while providing a balanced situation immediately after initiating the degrowth (capacity change). The position(s) of the K nodes to be selected for removal from the N existing nodes is deduced analogously (1-based) as:

$$\mathrm{floor}(N/(2K)+1+(i-1)(N/K)),\ i = 1, \ldots, K.$$

In an example, an elastic IMS Core component load-balancing Session Initiation Protocol (SIP) requests across multiple instances of the component can take advantage of the method described above. The virtualised function can therefore be a virtualised network function, such as for a wireless telecommunications network. For example, IMS core software can be modified by extending a dispatcher load-balancing module. Typically, the said module performs hash-based load-balancing of SIP messages. However, typical IMS core software components are not readily designed to elastically scale out and back in, and do not specifically contain the logic needed to transfer the internal state handled on behalf of users and/or sessions to other instances as may be needed according to an example.

As an example, Kamailio, which is an open-source IMS core software module can be modified by adding the capability to migrate any state kept internally on behalf of users, states, calls, corresponding to certain hash-value ranges to other Kamailio instance(s); this can be accomplished by modification to generic Kamailio internals, as well as addition of an API for modules, allowing transfer of additional state data that may be stored in individual modules for example, as well as implementing a Kamailio to Kamailio state transfer protocol. Furthermore, the capability to coordinate a re-assignment of the hash value ranges across executing Kamailio instances can be added to the dispatcher load-balancing module already in Kamailio, handling the necessary state transfers as required.

As an alternative, the above described method can be added in Cassandra as an additional "partitioner". Cassandra has the capability to migrate the (key, value) data items among running instances, in order to converge to a consistent situation, through the process known as Streaming, and its associated protocol.

According to an example, there is therefore provided a method and system for adding new instances to a cluster of balanced elastic components in program execution, in which workload balance is restored after addition, and in which the data transfers needed across the instances in order to restore a consistent location of all the managed data items are minimised.

Figure 4 is a schematic representation of a virtualised system in the form of a distributed computing environment according to an example. Multiple virtual machine instances VM1, VM2, VM3 are executing over physical hardware resources 403 of the environment 400 by way of a hypervisor or virtual machine monitor 401. The VMs, VM1-3, form a first set of virtual machine instances forming an elastic (pre-capacity-change) cluster 404 for a component of a virtualised function. Subsets of a range of identifiers 405 are mapped to respective ones of the first set of virtual machine.

The identifiers 405 represent at least a source and/or destination of a request submitted for the component, and are remapped in order to form reassigned subsets of the range of identifiers, to respective ones of a second set of virtual machine instances VM1-5 (shown in figure 5) that are logically positioned within a (post-capacity-change) cluster 504 of N+K (=5) instances according to a predefined rule 507 that can be stored in a storage device of the hardware 403 for example, whereby to minimise data transfer between respective ones of the multiple virtual machine instances of the first and second sets 404, 504 after a capacity change or request for a capacity change of the cluster 404.

As has been noted above, a converse solution in which two (for example) VM instances is removed from the cluster 504 would result in the situation depicted in figure 4. That is, the predefined rule 507 would determine that the VMs at logical positions 2 and 4 within the cluster 504, that is VM4 and VM5, would be removed.

Although figures 4 and 5 have been described with reference to a VMM and a set of physical resources, it should be appreciated that the hardware resources and the VMM can actually represent multiple hardware resources and multiple VMMs running on top of them. In this connection, VMs of a cluster can be instantiated over different VMMs that themselves may be executing over different sets of physical hardware.

According to an example, there is provided a method and system to perform load balancing in a distributed computing environment in which subsets of a range of identifiers, such as hash values for example, are mapped to respective ones of a first set of virtual machine instances forming an elastic cluster for a component of a virtualised function, in which the identifiers represent at least a source and/or destination of a request submitted for the component, that enables reassignment of identifiers among VM instances after growth and degrowth (that is, following capacity change), in order to minimize the data transfers that are needed to immediately recover a consistent balanced situation.

A virtualised system as shown in and described with reference to figures 1 to 5 is a scalable computing system in the form of a distributed computing environment in which a hypervisor executes on the physical computing hardware and is operable to instantiate one or more VMs for the system. A VM instance can be used to scale an application or application part in order to provide an additional instance (or an instance if there were previously none executing) for the application or part.

As used herein, the term virtual machine is not intended to be limiting. For example, a virtual machine can be in the form of an execution environment in the form of a container, or by way of OS-level virtualization for example. Accordingly, different isolated containers, or namespaces, or execution environments, residing in the same OS, but sufficiently isolated so that they are essentially executing in a exclusive OS environment can be used.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for performing load balancing in a distributed computing environment in which each token of a range of U tokens is mapped to a node in a set of N nodes, wherein each node is a virtual machine instance and the set of nodes is a cluster thereof for executing a component of a virtualised function, such that a respective subset of substantially U/N tokens is mapped to each node and the node having a position n may be defined as that node to which the $n^{th}$ subset of substantially U/N tokens is mapped, based on a given order of the tokens, wherein the method is performed in response to the addition or removal of K nodes to or from the set of N nodes to form a modified set of $N\pm K$ nodes and comprises the step of remapping the range of tokens to the nodes in the modified set of $N\pm K$ nodes, **characterised in that**, in the case of adding K nodes to the set of N nodes, the K nodes have positions within the modified set of N+K nodes, based on the given order of the tokens, given by round$\{(N/2K) + 1 + (i-1)[(N/K)+1]\}$, i=1, 2,....K and in the case of removing K nodes from the set of N nodes, the K nodes have positions within the set of N nodes, based on the given order of the tokens, given by floor$\{[(N-K)/2K] + 1 + (i-1)([(N-K)/K] + 1)\}$, i=1, 2,....K, wherein each token is an identifier in the form of a hash value of a request submitted by the users for the component of the virtualized function and which represents at least a source and/or destination of a request submitted for the component and wherein the tokens are assigned token values 0, 1, 2...U-1, and are remapped to form reassigned subsets with respective boundaries or limits in a token value space of 0, U/($N\pm K$), 2*U/($N\pm K$), ..., ($N\pm K-1$)*U/($N\pm K$), whereby to minimise data transfer between respective ones of the multiple virtual machine instances of the first and second sets after a capacity change or request for a capacity change of the cluster.

2. A method as claimed in claim 1, further including the step of using a load balancer to distribute workload between respective virtual machine instances.

3. A distributed computing environment, including physical computing hardware an arranged to carry out a method according to any of claims 1 to 2.

4. A distributed computing environment as claimed in claim 3, wherein each node is a virtual machine instance and the sets of nodes are clusters thereof for executing a component of a virtualised function, the virtualised function being a virtualised network function for a wireless telecommunications network.

5. A distributed computing environment as claimed in claim 4, further including a load balancer to distribute workload between respective virtual machine instances.

6. A computer program product, comprising a computer usable medium having computer readable program code embodied therein, said computer readable program code adapted to be executed to implement a method for performing load balancing in a distributed computing environment as claimed in any of claims 1 to 2.

## Patentansprüche

1. Verfahren zum Durchführen eines Lastausgleichs in einer verteilten Computing-Umgebung, in der jeder Token eines Bereichs von U Token abgebildet wird auf einen Knoten in einem Satz von N Knoten, wobei jeder Knoten eine virtuelle Geräteinstanz ist und der Satz von Knoten ein Cluster daraus zum Ausführen einer Komponente einer virtualisierten Funktion, sodass ein entsprechender Untersatz von im Wesentlichen U/N Token abgebildet wird auf jeden Knoten und wobei der Knoten, der eine Position n aufweist, definiert werden kann als der Knoten, auf den der n-te Untersatz von im Wesentlichen U/N Token abgebildet wird, auf Grundlage einer gegebenen Reihenfolge von Token, wobei das Verfahren durchgeführt wird als Antwort auf das Hinzufügen oder das Entfernen von K Knoten zu bzw. vom Satz von N Knoten zum Bilden eines modifizierten Satzes von N±K Knoten und umfassend den Schritt des erneuten Abbildens des Bereichs von Token auf die Knoten in dem modifizierten Satz von N±K Knoten, **dadurch gekennzeichnet, dass** wenn K Knoten zum dem Satz von N Knoten hinzugefügt werden, die K Knoten Positionen innerhalb des modifizierten Satzes von N±K Knoten aufweisen auf Grundlage der gegebenen Reihenfolge der Token, gegeben durch round{(N/2K) + 1+ (i-1)[(N/K)+1]}, i=1,2,....K, und im Falle des Entfernens von K Knoten aus dem Satz von N Knoten, die K Knoten Positionen innerhalb des Satzes von N Knoten aufweisen auf Grundlage der gegebenen Reihenfolge der Token, gegeben durch floor{[(N-K)/2K] + 1 + (i-1)([(N-K)/K] + 1)}, i=1,2,....K, wobei jeder Token eine Kennung ist in der Form eines Hashwerts einer Anforderung, die von den Benutzern vorgelegt worden ist für die Komponente der virtualisierten Funktion und welche mindestens eine Quelle und/oder ein Ziel einer Anforderung repräsentiert, die für die Komponente vorgelegt worden ist und wobei den Token Token-Werte 0, 1, 2...U-1 zugewiesen sind und die erneut abgebildet werden, um neu zugewiesene Untersätze zu bilden hinsichtlich entsprechender Grenzen in einem Token-Wertraum aus 0, U/(N±K), 2*U/(N±K), ..., (N±K-1)*U/(N±K) zum Minimieren des Datentransfers zwischen entsprechenden aus den mehreren virtuellen Geräteinstanzen der ersten und zweiten Sätze nach einer Kapazitätsänderung oder Anforderung einer Kapazitätsänderung des Clusters.

2. Verfahren nach Anspruch 1, weiterhin einschließend den Schritt des Benutzens eines Load Balancers zum Verteilen der Arbeitslast zwischen entsprechenden virtuellen Geräteinstanzen.

3. Eine verteilte Berechnungsumgebung, einschließend physische Berechnungshardware, die angeordnet ist zum Ausführen eines Verfahrens nach einem beliebigen der Ansprüche 1 bis 2.

4. Eine verteilte Berechnungsumgebung nach Anspruch 3, wobei jeder Knoten eine virtuelle Geräteinstanz ist und der Satz von Knoten aus Clustern daraus besteht zum Ausführen einer Komponente einer virtualisierten Funktion, wobei die virtualisierte Funktion eine virtualisierte Netzwerkfunktion für ein drahtloses Kommunikationsnetzwerk ist.

5. Eine verteilte Berechnungsumgebung nach Anspruch 4, weiterhin einschließend einen Load Balancer zum Verteilen der Arbeitslast zwischen entsprechenden virtuellen Geräteinstanzen.

6. Computerprogramm-Produkt, umfassend ein computerverwendbares Medium, das einen computerlesbaren Programmcode darin aufweist, wobei besagter computerlesbarer Programmcode ausgelegt ist, um ausgeführt zu werden und ein Verfahren zu implementieren zum Durchführen eines Lastausgleichs in einer verteilten Computing-Umgebung nach einem beliebigen der Ansprüche 1 bis 2.

**Revendications**

1. Procédé d'exécution d'un équilibrage de charge dans un environnement informatique réparti dans lequel chaque jeton dans une plage de U jetons est mis en correspondance avec un noeud parmi un ensemble de N noeuds, dans lequel chaque noeud est une instance de machine virtuelle et l'ensemble de noeuds est un groupe de celui-ci destiné à exécuter une composante d'une fonction virtualisée, de sorte qu'un sous-ensemble respectif de sensiblement U/N jetons soit mis en correspondance avec chaque noeud et que le noeud ayant une position n puisse être défini comme le noeud avec lequel le $n^{\text{ème}}$ sous-ensemble de sensiblement U/N jetons est mis en correspondance, en fonction d'un ordre donné des jetons, le procédé étant exécuté en réponse à l'ajout de K noeuds à l'ensemble de N noeuds ou à leur retrait de celui-ci pour former un ensemble modifié de N±K noeuds et comprend l'étape de remise en correspondance de la plage de jetons avec les noeuds dans l'ensemble modifié de N±K noeuds, **caractérisé en ce que**, en cas d'ajout de K noeuds à l'ensemble de N noeuds, les K noeuds ont des positions dans l'ensemble modifié de N+K noeuds, en fonction de l'ordre donné des jetons, données par arrondi{(N/2K) + 1+ (i-1)[(N/K)+1]}, i=1, 2,....K et en cas de retrait de K noeuds de l'ensemble de N noeuds, les K noeuds ont des positions dans l'ensemble de N noeuds, en fonction de l'ordre donné des jetons, données par plancher{[(N-K)/2K] + 1 + (i-1)([(N-K)/K] + 1)}, i=1, 2,....K, dans lequel chaque jeton est un identifiant sous la forme d'une valeur de hachage d'une demande soumise par les utilisateurs pour la composante de la fonction virtualisée et qui représente au moins une source et/ou une destination d'une demande soumise pour la composante et dans lequel les jetons sont des valeurs de jeton attribuées 0, 1, 2...U-1, et sont remis en correspondance pour former des sous-ensembles réattribués avec des limites respectives dans un espace de valeurs de jeton de 0, U/(N±K), 2*U/(N±K), ..., (N±K-1)*U/(N±K), réduisant ainsi au minimum le transfert de données entre des instances respectives parmi les multiples instances de machine virtuelle des premier et deuxième ensembles après un changement de capacité ou une demande de changement de capacité du groupe.

2. Procédé selon la revendication 1, comprenant en outre l'étape d'utilisation d'un équilibreur de charge pour répartir une charge de travail entre des instances de machine virtuelle respectives.

3. Environnement informatique réparti, comprenant un matériel informatique physique conçu pour exécuter un procédé selon l'une quelconque des revendications 1 à 2.

4. Environnement informatique réparti selon la revendication 3, dans lequel chaque noeud est une instance de machine virtuelle et les ensembles de noeuds sont des groupes de ceux-ci destinés à exécuter une composante d'une fonction virtualisée, la fonction virtualisée étant une fonction de réseau virtualisé pour un réseau de télécommunication sans fil.

5. Environnement informatique réparti selon la revendication 4, comprenant en outre un équilibreur de charge pour répartir une charge de travail entre des instances de machine virtuelle respectives.

6. Produit de programme informatique, comprenant un support lisible par ordinateur intégrant un code de programme lisible par ordinateur, ledit code de programme lisible par ordinateur étant adapté pour être exécuté pour mettre en oeuvre un procédé destiné à exécuter un équilibrage de charge dans un environnement informatique réparti selon l'une quelconque des revendications 1 et 2.

(a)

(b)

FIG. 1

(a)

(b)

FIG. 2

EP 2 940 580 B1

FIG. 3

FIG. 4

FIG. 5

**EP 2 940 580 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090172139 A

- US 20090031032 A

**Non-patent literature cited in the description**

- **I. STOICA et al.** Architectures and Protocols for Computer Communications. *Proceedings of the 2001 Conference on Applications,* ISBN 1-58113-411-8, 149-160